# EUROPÄISCHE PATENTSCHRIFT

(11) **EP 2 417 847 B1**
(45) Veröffentlichungstag und Bekanntmachung des Hinweises auf die Patenterteilung: **09.01.2013**
(21) Anmeldenummer: 11401564.7
(22) Anmeldetag: 08.08.2011
(51) Int. Cl.: A01C 15/04, A01C 7/08

(54) **Pneumatisch arbeitende Verteilmaschine**
Pneumatic distributor
Machine de répartition fonctionnant de manière pneumatique

(30) Priorität: 13.08.2010 DE 102010036974
(43) Veröffentlichungstag der Anmeldung: 15.02.2012
(73) Patentinhaber: Amazonen-Werke H. Dreyer GmbH & Co. KG, 49205 Hasbergen (DE)
(72) Erfinder: Häfker, Gerd, 27305 Süstedt (DE); Paulsen, Sven, 27798 Hude (DE); Wilken, Martin, 26409 Wittmund (DE)

(56) Entgegenhaltungen:
- WO-A1-98/42177
- DE-A1-102005 038 786
- US-A- 4 685 843

## Beschreibung

Die Erfindung betrifft eine pneumatisch arbeitende Verteilmaschine gemäß des Oberbegriffes des Patentanspruches 1. Eine derartige Verteil maschine ist aus US-A-4 685 843 bekannt.

Eine pneumatisch arbeitende Verteilmaschine ist beispielsweise durch die EP 09 56 757 B1 bekannt. Diese Verteilmaschine weist eine Förderleitung mit einem Umlenkbogen auf. Der Umlenkbogen mündet in einem senkrecht aufsteigenden Steigrohr, welches einen Bereich der Förderleitung bildet. Dieses Steigrohr weist ein wellenförmiges Zerstreuungsrohr auf. Der Umlenkbogen zwischen dem horizontal verlaufenden Bereich der Förderleitung und dem senkrecht aufsteigenden Bereich der Förderleitung ist als Flachrohrbogen ausgebildet. Durch den Flachrohrbogen soll eine bessere und gleichmäßigere Verteilung und Zuführung des Saatgutes in dem Luftstrom zu dem Zerstreuungsrohr und dem Verteiler erreicht werden. Die Ausgestaltung des Umlenkbogens als Flachrohrbogen erfordert eine besondere Fertigung des Umlenkbogens sowie gesonderte Übergangsstücke zwischen den einen runden Querschnitt aufweisenden übrigen Bereich der Förderleitung und dem Umlenkbogen.

Der Erfindung liegt die Aufgabe zugrunde, mit einfachen Mitteln und einfacher Ausgestaltung des Förderweges im Umlenkbereich und vor der Zuführung des zu verteilenden Materiales zum Zerstreuungsrohr eine gute und gleichmäßige Zuführung und Verteilung des Saatgutes im Luftstrom zu dem Zerstreuungsrohr vorzugsweise ohne zusätzliche Einbauten in den Umlenkbogen zu erreichen.

Diese Aufgabe wird erfindungsgemäß durch die kennzeichnenden Merkmale des Patentanspruches 1 gelöst. Infolge dieser Maßnahmen kann der Umlenkbogen aus herkömmlichen Krümmungsbögen und Förderleitungselementen hergestellt werden. Derartige Krümmungsbögen und/oder Leitungsabschnitte lassen sich in einfacher Weise herstellen und aneinander anfügen. Hierdurch ist eine preiswerte Fertigung der Krümmungsbögen für den Umlenk- und Zuführungsbereich zu dem Zerstreuungsrohr möglich. In überraschender Weise hat sich gezeigt, dass mit einer derartigen Ausgestaltung des Umlenkbogens unter der Förderstrecke vor dem Zerstreuungsrohr durch die erfindungsgemäße Anordnung der Krümmungs- und Förderstrecke vor dem Zerstreuungsrohr eine gleichmäßige Verteilung des Saatgutes im Luftstrom bei der Übergabe in dem senkrecht aufsteigenden Bereich der Förderleitung zu dem wellenförmigen Zerstreuungsrohr erreicht wird. Durch eine derartig kombinatorische Gesamtwirkung von einfindungsgemäßen Umlenkbogen in Verbindung mit dem wellenförmigen Zerstreuungsrohr lässt sich in äußerst einfacher Weise eine gleichmäßige Zuführung des Saatgutluftgemisches zu dem Verteiler und damit eine gleichmäßige Aufteilung auf die von dem Verteiler wegführenden Leitung zu den einzelnen Ausbringorganen überraschend Weise erreichen.

Durch die erfindungsgemäße Anordnung der Krümmungsbogen der Umlenkbögen hintereinander ergibt sich so in einfacher Weise ein S-förmig verlaufend ausgestalteter Umlenkbogen.

Eine einfache Ausgestaltung der gesamten Förderleitung ergibt sich dadurch, dass die Förderleitung auch in Bereich des Umlenkbogens einen runden Querschnitt aufweist.

Eine besonders einfache Ausgestaltung des Umlenkbogens ergibt sich dadurch, dass die Krümmungsbögen über ihren gesamten Verlauf jeweils zumindest annähernd den gleichen Krümmungsradius aufweisen.

Weiterhin ergibt sich eine sehr einfache Ausgestaltung der Förderleitung auch im Bereich der Umlenkbögen dadurch, dass die Krümmungsbögen über ihren gesamten Verlauf jeweils zumindest annähernd den gleichen Durchmesser aufweisen.

Weiterhin ist in einer Ausführungsform vorgesehen, dass der weitere Krümmungsbogen sich unmittelbar an das Zerstreuungsrohr anschließt.

In einer anderen Ausführungsform ist vorgesehen, dass zwischen dem weiteren Krümmungsbogen und dem Zerstreuungsrohr ein senkrecht verlaufend ausgestalteter Bereich Förderleitung angeordnet ist.

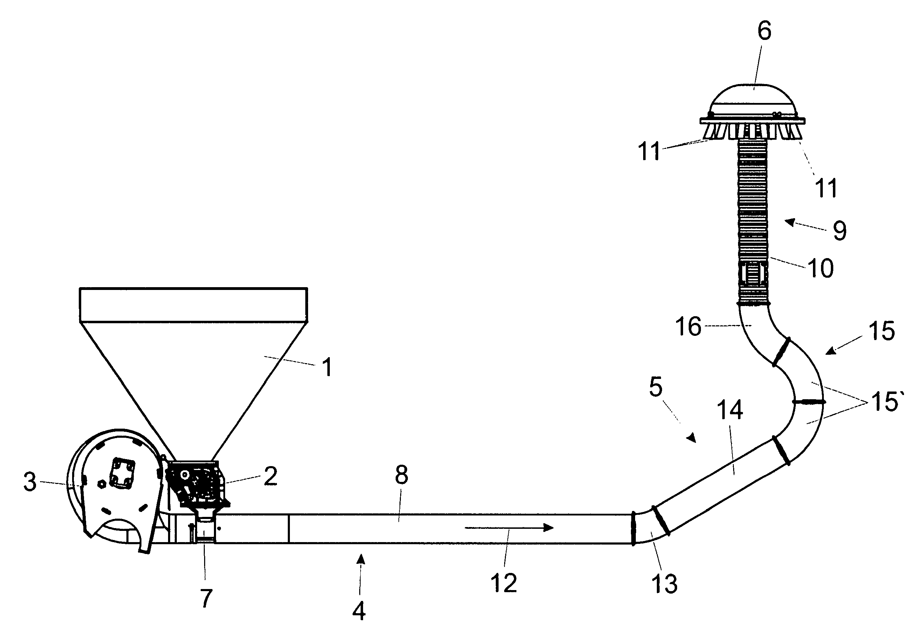

Weitere Einzelheiten der Erfindung sind der Beispielsbeschreibung und der Zeichnung zu entnehmen. Die Zeichnung zeigt
die Anordnung des Vorratsbehälters der Dosiereinrichtung und Förderleitung mit Verteilerkopf einer Verteilmaschine in Seitenansicht und Prinzipdarstellung.

Der Einfachheit halber sind in der Zeichnung lediglich der Vorratsbehälter 1, die Dosiereinrichtung 2, die von dem angetriebenen Gebläse 3 pneumatisch beaufschlagte Förderleitung 4 mit Umlenkbereich 5 und einem als Verteilerkopf 6 ausgebildeten Verteiler dargestellt. In dem Vorratsbehälter 1 befindet sich das auszubringende Material, hier beispielsweise Saatgut. Dieses sich im Vorratsbehälter 1 befindliche Saatgut wird über das Dosierorgan 2 in einstellbaren Mengen über eine Schleuse 7 in den Förderluftstrom der Förderleitung 4 eingespeist. Über den horizontal verlaufenden Bereich 8 der Förderleitung wird das Saatgut von dem Luftstrom, der von dem angetriebenen Gebläse 3 erzeugt wird dem zwischen dem horizontalen Bereich 8 der Förderleitung 4 und dem senkrecht aufsteigenden Bereich 9 des Zerstreuungsrohres 10 über den in der Förderleitung 4 angeordneten Umlenkbereich 5 zugeführt. Der senkrecht aufsteigende Bereich 9 der Förderleitung 4 weist einen Bereich auf, der als wellenförmiges Zerstreuungsrohr 10 ausgebildet ist. Am Ende der senkrecht aufsteigenden Förderleitung 4 ist der als Verteilerkopf 6 ausgebildet Verteiler angeordnet, von dem aus Abgangsleitungen 11, an denen zu einzelnen Ausbringorganen, die beispielsweise als Säschare ausbildet sind, führende Leitungen angeschlossen sind. Von dem Verteilerkopf 6 wird das über dem Zerstreuungsrohr 10 dem Verteiler 6 zugeführten Saatgut in gleichmäßiger Weise auf die einzelnen Abgangsleitungen 11 aufgeteilt.

Der Umlenkbereich 5 weist mehrere Krümmungsbereiche auf. In Förderrichtung 12 gesehen schließt sich an den horizontalen Bereich 8 der Förderleitung 5 ein erster Umlenkbogen 13 mit einem Krümmungsbereich zwischen 20° und 70°, vorzugsweise 30° bis 60° an, hier im Ausführungsbeispiel von 30° an. An den ersten Umlenkbogen 13 schließt sich ein geradlinig schräg aufsteigend verlaufender Bereich 14 der Förderleitung 8 an. An den geradlinig schräg aufsteigend verlaufenden Bereich 14 der Förderleitung 4 schließt sich ein zweiter Umlenkbogen 15 mit einem Krümmungsbereich mit mehr als 90°, vorzugsweise 110° bis 135° an, der aus zwei einzelnen Bögen 15' gleicher Krümmungsgröße zusammengesetzt sein kann, wie die Zeichnung zeigt. An den zweiten Krümmungsbogen 15 schließt sich ein weiterer Krümmungsbogen 16 mit entgegengesetzter Krümmung und einem derartigen Krümmungswinkelmaß an, so dass er in Richtung des senkrecht verlaufenden Zerstreuungsrohres 10 geführt ist.

Somit sind die Umlenkbögen in dem Bereich vor dem Zerstreuungsrohr 10 mit seinen Krümmungsbögen 15 und 16 S-förmig verlaufend ausgestaltet ist.

Die Krümmungsbögen 13, 15, 16 weisen über ihren gesamten Verlauf jeweils zumindest annähernd den gleichen Krümmungsradius auf.

Weiterhin weisen die Krümmungsbögen 13, 15, 16 über ihren gesamten Verlauf jeweils zumindest annähernd den gleichen Durchmesser auf.

Der weitere Krümmungsbogen 16 schließt sich im Ausführungsbeispiel unmittelbar an das Zerstreuungsrohr 10 an.

In nicht dargestellter Weise ist es jedoch auch möglich, zwischen dem weiteren Krümmungsbogen 16 und dem Zerstreuungsrohr 10 einen kurzen senkrecht verlaufend ausgestalteten Bereich der Förderleitung anzuordnen.

Durch den erfindungsgemäß verlaufend ausgestalteten Verlauf des von den Krümmungsbögen 13, 15 und 16 in Verbindung mit dem schräg ansteigend verlaufen leitungsstück gebildeten Umlenkbereiches 5 wird eine Vergleichmäßigung des Saatgutes über den Querschnitt der Förderleitung am Ende des Umlenkbogens 16 im Luftstrom bei der Übergabe in den senkrecht aufsteigenden Bereich der Förderleitung 4 zu dem wellenförmigen Zerstreuungsrohr 10 erreicht, so dass sich in überraschender Weise eine äußerst gleichmäßige Verteilung des Saatgutes im Luftstrom im Zusammenwirken mit dem Zerstreuungsrohr 10 am Ende der Förderleitung 4 bei der Übergabe zu dem Verteiler 6 ergibt. Hierdurch wird eine sehr gleichmäßige Verteilung des Saatgutes auf die einzelnen Abgangsleitungen 11 über den Verteiler 6 erreicht.

## Patentansprüche

1. Pneumatisch arbeitende Verteilmaschine zum Verteilen von Saatgut oder Düngemittel,
mit einem Vorratsbehälter für das Verteilgut,
einem damit in Verbindung stehenden Dosierorgan,
einem Verteiler der über eine pneumatische Förderleitung mit dem Dosierorgan verbunden ist,
von dem Verteiler führenden Leitungen zu einzelnen Ausbringorganen,
wobei die pneumatische Förderleitung ab zumindest einem Umlenkbogen zumindest einen Richtungswechsel beschreibt und im Wesentlichen senkrecht aufsteigend an den Verteiler herangeführt ist,
wobei die Förderleitung in ihrem letzten liegengend verlaufenden Bereich bis zu zumindest einem Umlenkbogen zumindest annähernd horizontal verlaufend herangeführt ist, wobei der senkrecht aufsteigende Bereich der Förderleitung zwischen dem Umlenkbogen und dem Verteiler zumindest teilweise als wellenförmiges Zerstreuungsrohr ausgebildet ist, wobei
sich in Förderrichtung (12) gesehen an den horizontalen Bereich (8) der Förderleitung (4) ein erster Umlenkbogen (13) mit einem Krümmungsbereich zwischen 20° und 70°, vorzugsweise 30° bis 60° anschließt und wobei
sich an den ersten Umlenkbogen (13) ein geradlinig schräg aufsteigend verlaufender Bereich (14) der Förderleitung (4) anschließt, **dadurch gekennzeichnet,**
**dass** sich an den geradlinig schräg aufsteigend verlaufenden Bereich (14) der Förderleitung (4) ein zweiter Umlenkbogen (15) mit einem Krümmungsbereich mit mehr als 90°, vorzugsweise 110° bis 135° anschließt, dass sich an den zweiten Krümmungsbogen (15) ein weiterer Krümmungsbogen (16) mit entgegengesetzter Krümmung und einem derartigen Krümmungswinkelmaß anschließt, so dass er in Richtung des senkrecht verlaufenden Zerstreuungsrohres (10) geführt ist.

2. Verteilmaschine nach Anspruch 1, **dadurch gekennzeichnet, dass** der Umlenkbereich in dem Bereich vor dem Zerstreuungsrohr (10) mit seinen Krümmungsbögen (15, 15', 16) S-förmig verlaufend ausgestaltet ist.

3. Verteilmaschine nach einem oder mehreren der vorstehenden Ansprüche, **dadurch gekennzeichnet, dass** die Krümmungsbögen (13, 15, 16) über ihren gesamten Verlauf jeweils zumindest annähernd den gleichen Krümmungsradius aufweisen.

4. Verteilmaschine nach einem oder mehreren der vorstehenden Ansprüche, **dadurch gekennzeichnet, dass** die Krümmungsbögen (13, 15, 16) über ihren gesamten Verlauf jeweils zumindest annähernd den gleichen Durchmesser aufweisen.

5. Verteilmaschine nach Anspruch 1, **dadurch gekennzeichnet, dass** der weitere Krümmungsbogen (16) sich unmittelbar an das Zerstreuungsrohr anschließt.

6. Verteilmaschine nach Anspruch eins, **dadurch gekennzeichnet, dass** zwischen dem weiteren Krümmungsbogen (16) und dem Zerstreuungsrohr (10) ein senkrecht verlaufend ausgestalteter Bereich Förderleitung angeordnet ist.

## Claims

1. Pneumatically operating distribution machine for distributing seed or fertilizer,
having a storage container for the material to be distributed,
a metering member connected thereto,
a distributor which is connected to the metering member via a pneumatic feed line,
lines that lead from the distributor to individual dispensing members,
wherein the pneumatic feed line describes at least one change in direction from at least one deflecting bend and is guided in a substantially vertically rising manner up to the distributor, wherein the feed line is guided in a manner extending at least approximately horizontally in its final lying region to at least one deflecting bend, wherein the vertically rising region of the feed line between the deflecting bend and the distributor is formed at least partially as a corrugated spreading tube, wherein,
as seen in the feeding direction (12), the horizontal region (8) of the feed line (4) is followed by a first deflecting bend (13) having a range of curvature between 20° and 70°, preferably 30° to 60°, wherein
the first deflecting bend (13) is followed by a region (14) of the feed line (4) that rises obliquely in a straight line, **characterized in that**
the region (14) of the feed line (4) that rises obliquely in a straight line is followed by a second deflecting bend (15) having a range of curvature of greater than 90°, preferably 110° to 135°, and
**in that** the second arc of curvature (15) is followed by a further arc of curvature (16) having opposite curvature and such an angular curvature that it is guided in the direction of the vertically extending spreading tube (10).

2. Distribution machine according to Claim 1, **characterized in that** the deflecting bend is configured in an S-shaped manner with its two arcs of curvature (15, 15', 16) in the region in front of the spreading tube (10).

3. Distribution machine according to one or more of the preceding claims, **characterized in that** the arcs of curvature (13, 15, 16) each have at least approximately the same radius of curvature along their entire course.

4. Distribution machine according to one or more of the preceding claims, **characterized in that** the arcs of curvature (13, 15, 16) each have at least approximately the same diameter along their entire course.

5. Distribution machine according to Claim 1, **characterized in that** the further arc of curvature (16) immediately adjoins the spreading tube.

6. Distribution machine according to Claim 1, **characterized in that** a region of the feed line that is configured in a vertically extending manner is arranged between the further arc of curvature (16) and the spreading tube (10).

## Revendications

1. Machine d'épandage pneumatique pour épandre des semences ou des engrais, comprenant :
un réservoir pour le produit à épandre,
un organe de dosage raccordé à celui-ci,
un épandeur qui est raccordé à l'organe de dosage par le biais d'une conduite de transport pneumatique,
des conduites conduisant depuis l'épandeur jusqu'à des organes de décharge individuels,
la conduite de transport pneumatique à partir d'au moins un arc de déviation décrivant au moins un changement de direction et étant rapprochée de l'épandeur en montant essentiellement verticalement,
la conduite de transport étant rapprochée dans sa dernière région s'étendant à plat jusqu'à au moins un arc de déviation en s'étendant au moins approximativement horizontalement, la région de la conduite de transport montant verticalement étant réalisée entre l'arc de déviation et l'épandeur au moins en partie sous forme de tube diffuseur de forme ondulée,
un premier arc de déviation (13) avec une région de courbure comprise entre 20° et 70°, de préférence entre 30° et 60°, vu dans la direction de transport (12), se raccordant à la région horizontale (8) de la conduite de transport (4), et une région (14) de la conduite de transport (4) s'étendant en montant obliquement de manière rectiligne se raccordant au premier arc de déviation (13),
**caractérisée en ce**
**qu'**un deuxième arc de déviation (15) avec une région de courbure de plus de 90°, de préférence de 110° à 135°, se raccorde à la région (14) de la conduite de transport (4) s'étendant en montant obliquement de manière rectiligne, et en ce qu'au deuxième arc courbe (15) se raccorde un arc courbe supplémentaire (16) de courbure opposée et dont la plage de courbure angulaire est telle qu'il soit guidé dans la direction du tube de dispersion (10) s'étendant verticalement.

2. Machine d'épandage selon la revendication 1, **caractérisée en ce que** la plage de déviation est configurée avec ses arcs courbes (15, 15', 16) de manière à s'étendre en forme de S.

3. Machine d'épandage selon l'une quelconque ou plusieurs des revendications précédentes, **caractérisée en ce que** les arcs courbes (13, 15, 16) présentent sur toute leur étendue à chaque fois au moins approximativement le même rayon de courbure.

4. Machine d'épandage selon l'une quelconque ou plusieurs des revendications précédentes, **caractérisée en ce que** les arcs courbes (13, 15, 16) présentent sur toute leur étendue à chaque fois au moins approximativement le même diamètre.

5. Machine d'épandage selon la revendication 1, **caractérisée en ce que** l'arc courbe supplémentaire (16) se raccorde directement au tube de dispersion.

6. Machine d'épandage selon la revendication 1, **caractérisée en ce qu'**entre l'arc courbe supplémentaire (16) et le tube de dispersion (10) est disposée une région de la conduite de transport configurée de manière à s'étendre verticalement.
